# EUROPEAN PATENT APPLICATION

(11) **EP 2 006 758 A1**
(43) Date of publication of application: **24.12.2008**
(21) Application number: 07109676.2
(22) Date of filing: 05.06.2007
(51) Int. Cl.: G06F 1/16, G06F 1/26

(54) **Composite connection port device**

(71) Applicant: MyMemory Ltd., ChengDe Road Taipei City 111 (TW); Cheng, Hsin-Hui, Jhonghe Ctiy, Taipei County 235 (TW)
(72) Inventor: Cheng, Hsin-Hui, Jhonghe City, Taipei County 235 (TW); Hsieh, Ping-Lun, Taipei City 111, Taiwan (R.O.C.) (TW)
(74) Representative: Chaillot, Geneviève

(57) **Abstract**

A composite port connection device, and is provided with a plurality sets of connection ports for the user to connect them to various types of electronic devices. The connection ports include power output port and data transmission port. The major function of the invention is that, upon receiving the local power supply and data signals at input terminal, the power supply and the data signals are processed separately and independently, then they are connected to the related output ports respectively. Thus, the device enables a user to connect each of the respective output ports to each of the various electronic devices, hereby achieving the objective of providing power supply and realizing data transmission.

## Description

### BACKGROUND

### Field of Invention

The invention relates to a connection port device, and in particular to a composite connection port device having power and information processing capabilities.

### Related Art

In recent years, due to the rapid progress and development of science and technology, the design of various electronic devices (for example, personal computer, mobile phone, personal digital assistant, MP3, notebook computer, and other miscellaneous electronic products) are progressing by leaps-and-bounds. In such numerous electronic devices, various corresponding connection ports are designed to conduct power transmission or information transmission.

In order to enable people to effectively utilize these electric devices and transmit the information in their living quarters and working environment as required, conventionally, connection port devices are designed to be embedded in wall or under floor in the living quarters or working environments. Usually, this kind of connection port device not only includes the traditional power supply socket, it but also includes telephone line connection port or network port. Though this kind of design may achieve the purposes of both esthetics and practicality, however, the related electronic device is required to use more than two connection port devices at the same time to provide normal and complete functions. By way of example, some of the in-house telephone device must be provided with power supply sockets and telephone line connection port to be able to function normally; while the personal computers are required to have power supply socket and network connection port, thus being able to get on the network to proceed with various operations required.

In addition to the afore-mentioned connection port devices, in recent years, various plug-and-play embedded memory (for example, various memory cards), or various data transmission interfaces (for example, Universal Serial Bus (USB)) are developed for the information processing device. Wherein, for the Universal Serial Bus (USB), it is designed to have the advantages of plug-and-play, hot swapping functions and high transmission speed. In addition, it is provided with the rechargeable functions of the portable information product (such as MP3, digital camera, etc.). However, this kind of design involves some over-complicated interface Specifications, and may result in quite a lot of trouble and inconvenience for the user in operating such an electronic information device. Therefore, the problem of how to integrate and utilize the connection ports of various specifications and be compatible with the requirement of future trend, is probably the most urgent task that has to be solved in this field.

### SUMMARY OF THE INVENTION

In view of the above-mentioned drawbacks and shortcomings of the prior art, the objective of the invention is to provide a composite connection port device, thus improving and overcoming the shortage and limitations of the prior art. According to the connection port device disclosed in the invention, it is provided with a plurality of connection ports for the user to connect to various kinds of electronic devices. In general, connection port can be classified as a power supply connection port and a signal connection port. Thus, in the invention, its major function is that, upon receiving the ordinary local power supply and information signals at the input terminals of a device of the invention, the power supply and the information signals are processed separately and independently, then, they are connected to the various output connection ports. As such, the various output connection ports can be utilized by the user to connect to the various electronic devices, hereby achieving the objective of providing the power supply and information transmission required through the application of the invention.

An object of the invention is to provide a composite connection port device, comprising at least one input terminal, used to receive a local power supply and perform information transmission; a power processing unit, connected to said input terminal, and is used to convert said local power supply into a working power supply and then output the working power supply; a signal processing unit , used to couple and transmit said information; and a plurality of output ports, used to output said local power supply and said working power supply, and is connected to an electronic device to realize said information transmission.

In one embodiment of the present invention, said power processing unit further includes a buck circuit and a rectifier circuit, and can further include a signal separation circuit.

In a further embodiment of the invention, said output ports further includes a plurality of power supply ports and a plurality of signal ports.

In a further embodiment of the invention, said power supply port is a power supply socket, and is used to receive and transmit said local power supply.

In a further embodiment of the invention, said power supply port is selected from the group consisting of a USB port and an IEEE1394 port.

In a further embodiment of the invention, said USB ports are used to form a USB hub, said respective USB ports can be connected to said power processing unit, and are used to transmit said working power supply.

In a further embodiment of the invention, said signal port is selected from the group consisting of a telephone port, a network port, a memory card port, a high speed digital port, an IEEE1394 port, and a USB port.

In a further embodiment of the invention, said signal port is an optical fiber port.

In a further embodiment of the invention, said signal processing unit is further connected to a wireless transmission module.

Further scope of applicability of the invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The invention will become more fully understood from the detailed description given hereinbelow for illustration only, and thus are not limitative of the present invention, and wherein:
Fig. 1 is a schematic diagram of a composite connection port device according to a first embodiment of the invention;
Fig. 2 is a schematic diagram of the system framework of a composite connection port device according to a first embodiment of the invention;
Fig 3 is a schematic diagram of a composite connection port device according to a second embodiment of the invention; and
Fig. 4 is a schematic diagram of the system framework of a composite connection port device according to a second embodiment of the invention.

### DETAILED DESCRIPTION OF THE INVENTION

The purpose, construction, features, and functions of the invention can be appreciated and understood more thoroughly through the following detailed description with reference to the attached drawings.

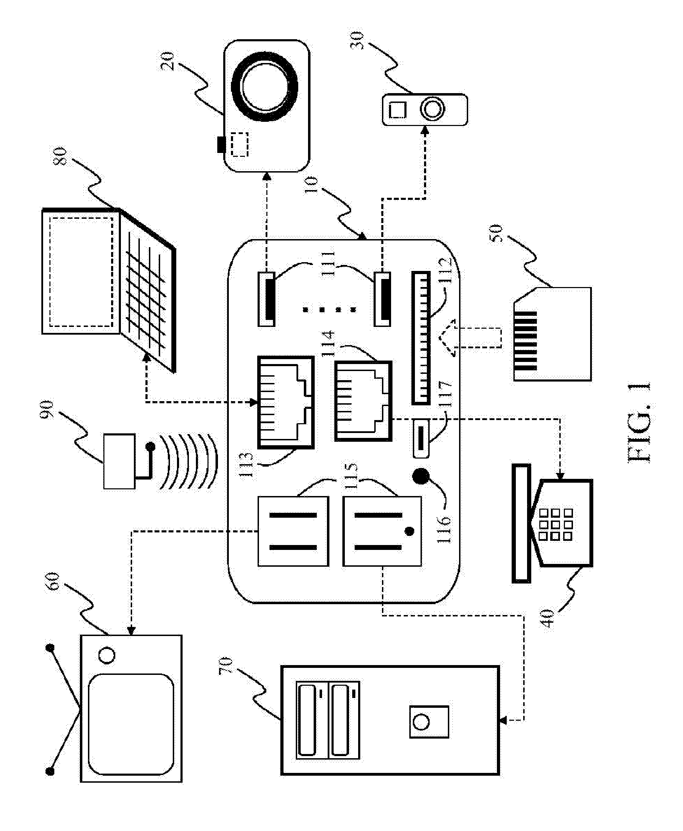

Firstly, refer to Fig. 1 for a schematic diagram of a composite connection port device according to a first embodiment of the invention. As shown in Fig. 1, the composite connection port device of the invention includes a plurality of output connection ports and a built-in wireless transmission module. The output connection can be classified into a power connection port (for example, power supply socket 115 and USB port 111) and a signal connection port (for example, memory card port 112, network port 113, telephone port 114, optical fiber port 116, and high speed digital port 117), and each of which will be described as follows. Wherein, USB port 111 can be provided in plurality, having the capability of forming into a USB hub, and is capable of providing working power and transmitting data required at the same time. By way of example, a user may charge a portable digital player (MP3) 30 directly through a USB port 111, or read the photograph data stored in a digital camera 20 through a USB port 111 connected thereto. The USB port 111 can be replaced by other ports (such as IEEE 1394) having power supply and data transmission capabilities. The memory card port 112 is used to provide data transmission to memory card 50. Likewise, the network port 113 (schematically shown as connected to a notebook computer 80), the telephone port 114 (schematically shown as connected to a telephone device 40) can be connected to the corresponding devices for data transmission. The high speed digital port 117 is a High Definition Multimedia Interface (HDMI) compatible with various digital requirements of the future trend. The wireless transmission module can be used to communicate and transmit information directly to an external wireless transmission system 90. The power supply socket 115 is utilized to provide the local power supply directly to a data processing device 70 or various electronic devices 60 (for example, television, audio device, etc.). Taking into consideration of future requirements, in the invention, an optical fiber port 116 is also provided for connecting to the related device and transmitting optical signals.

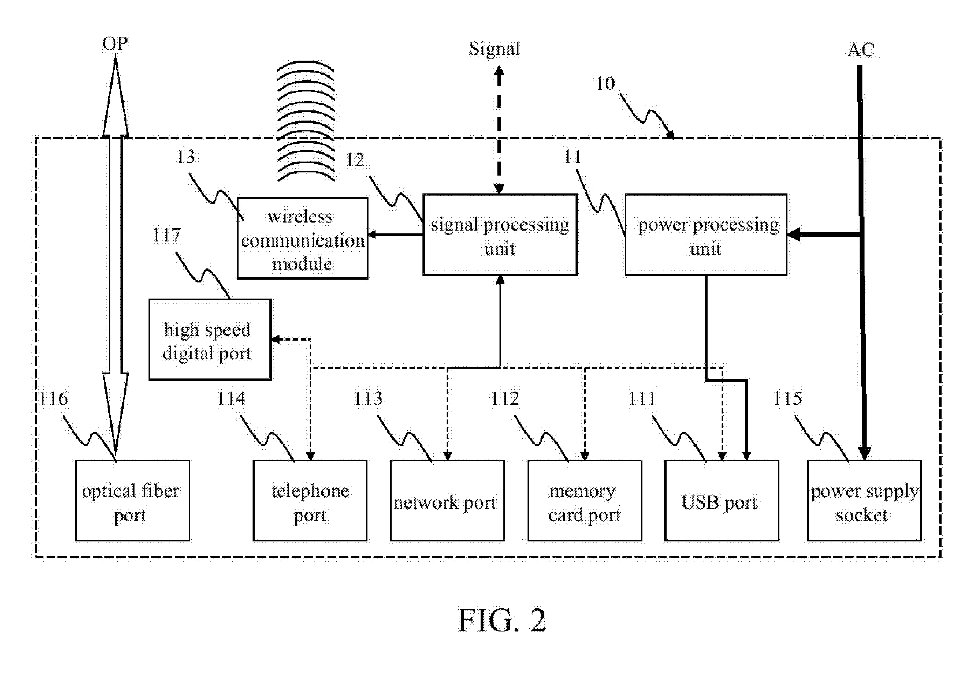

Subsequently, the internal system framework of the invention is described in detail. Refer to Fig. 2 for a schematic diagram of the system framework of a composite connection port device according to a first embodiment of the invention. In the structure, the input terminals include a local power supply terminal AC, a signal terminal Signal, and an optical fiber network terminal OP. Wherein, upon receiving the local power supply, it is separated and transmitted into two branches. In one branch, the power is transmitted directly to a power supply socket 115 to provide power to ordinary electronic devices (for example, television, audio device, etc.). In the other branch, power is transmitted to a power processing unit 11, where it is rectified and voltage reduced to form a power supply of working voltage and is transmitted to a USB port (USB hub)111. The power processing unit 11 includes a buck circuit and a rectifier circuit, while voltage stabilization and current restriction functions are also provided. The signal processing unit 12 is coupled to a USB port 111, a memory card port 112, a network port 113, a telephone port 114, and a high speed digital port 117, with its major function as providing connections between / among various ports; meanwhile, it may communicate with a signal terminal Signal, hereby transmitting signals and data thereto. At the same time, the signal processing unit 12 is connected to a wireless transmission module 13, thus being able to transmit / receive data and messages to / from an external wireless transmission system. The optical fiber port 116 corresponds directly to an optical fiber network terminal OP, and is used to transmit and receive the optical signals.

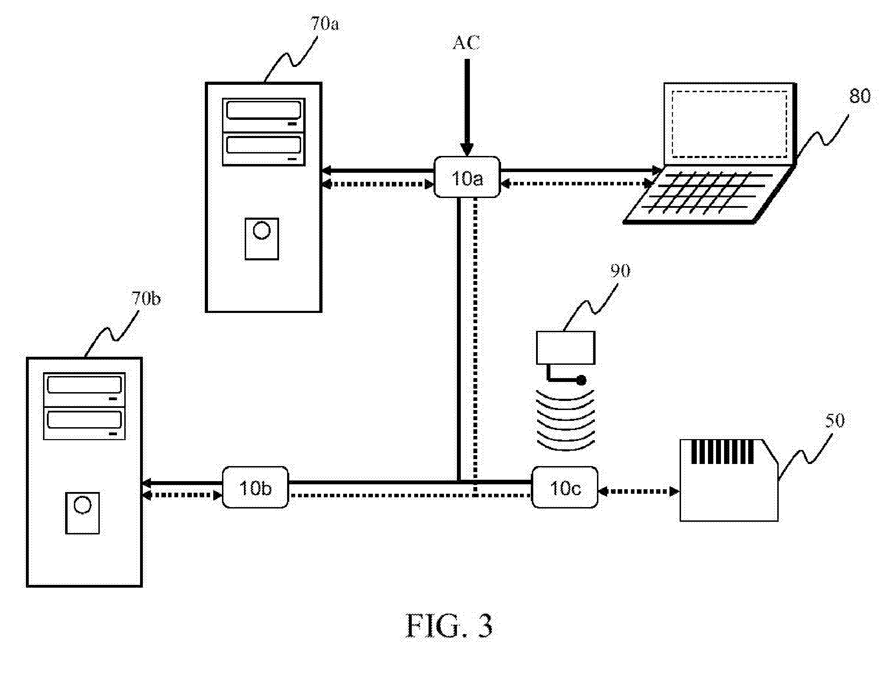

In addition, refer to Fig 3 for a schematic diagram of a composite connection port device according to a second embodiment of the invention. And this is a variant of the first embodiment of the same invention described above.

Nowadays, in the living quarters of most of the people, the density of power lines distribution is quite enormous. In case that the data signals can be coupled into these power lines, then the cost and effort of signal line layout and installation can be saved, meanwhile, the interference between microwaves utilized in wireless transmission can also be eliminated. The prerequisite of realizing the second embodiment is that, both the power signals and data signals can be transmitted through the same input terminal, thus achieving the functions and effectiveness of the invention. Therefore, as shown in Fig. 3 that power lines are connected to the local power supply terminal AC, hereby forming 3 composite connection port devices 10(a-c). In this configuration, a composite connection port device 10a is connected to an information processing device 70a and a notebook computer 80, and due to the characteristic of the invention that it is capable of providing the power supply and performing data transmission required at the same time, thus the information processing device 70a and the notebook computer 80 may not only have the power to function, but also may perform data transmission to each other; moreover, a composite connection port device 10b is connected to an information processing device 70b, thus information processing device 70b may likewise transmit data signals to an information processing device 70a and the notebook computer 80; furthermore, in a similar manner, the data stored in a memory card 50 connected to a composite connection port device 10c can be read simultaneously by information processing devices 70 (a-b) and notebook computer 80. Meanwhile, a built-in wireless transmission module is provided in composite connection port device 10c, thus it may communicate with a wireless transmission system 90 at the same time. Therefore, all the devices are connected together in this manner to communicate information with each other, hereby achieving the convenience in operation without having to add and install additional network lines.

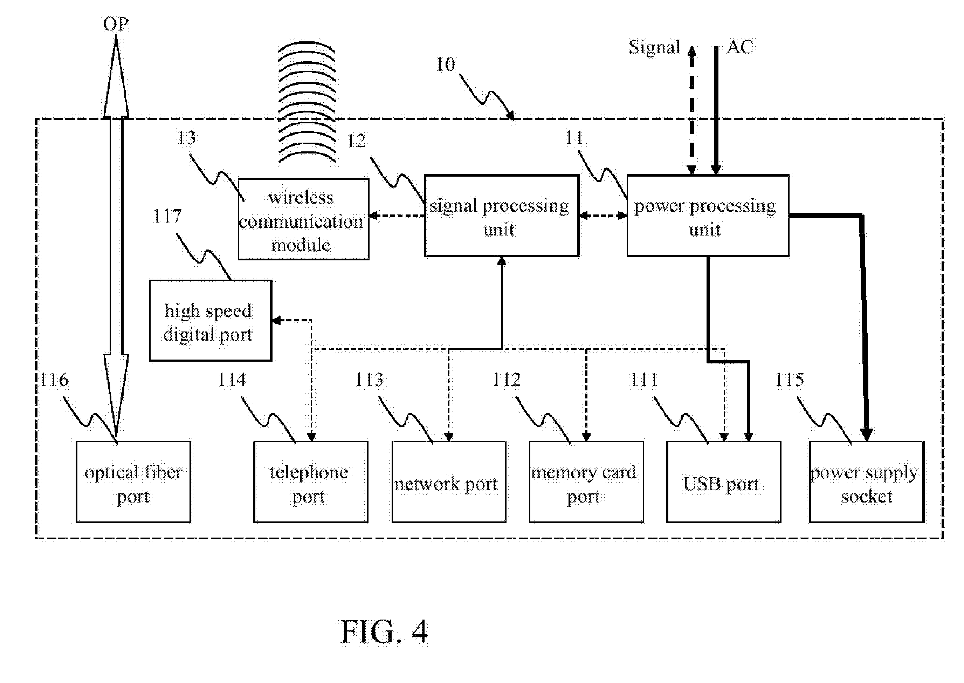

Finally, refer to Fig. 4 for a schematic diagram of the system framework of a composite connection port device according to a second embodiment of the invention. In this embodiment, it is assumed that data transmissions are achieved through utilizing power lines, as such, the input terminals may only include a local power supply terminal AC and a signal terminal Signal connected to power line and an optical fiber network terminal OP. In this situation, the input local power supply will first be transmitted to a power processing unit 11, where it is branched into two separate routes for transmission. Wherein, one route is used to transmit the power supply to a power supply socket 115, hereby providing power supply to ordinary electronic devices (for example, TV and audio devices) for utilization. In the other route, power supply is transmitted through power processing unit 11, where it is rectified and voltage-reduced to form a working voltage power supply, and is transmitted to USB port (USB hub) 111. The power processing unit 11 includes a buck circuit and a rectifier circuit, while the voltage stabilization and current restriction functions are also provided. Through a signal terminal Signal, data signals are transmitted via a signal separation circuit in a power processing unit 11 to a signal processing unit 12, and then it is coupled to a USB port 111, a memory card port 112, a network port 113, a telephone port 114, and a high speed digital port 117. Wherein, signal processing unit 12 is in charge of coupling between / among various ports for data signals, meanwhile, it is connected to a signal terminal Signal through power processing unit 11 for transmitting data signals. At the same time, the signal processing unit 12 is coupled to a wireless transmission module 13, thus it may transmit and receive data signals to and from an external wireless transmission system. The optical fiber port 116 corresponds directly to an optical fiber network terminal OP, and is used to transmit and receive optical signals.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A composite connection port device (10), comprising:
at least one input terminal, used to receive a local power supply and perform information transmission;
a power processing unit (11), connected to said input terminal, and is used to convert said local power supply into a working power supply and then output the working power supply;
a signal processing unit (12), used to couple and transmit said information; and
a plurality of output ports, used to output said local power supply and said working power supply, and is connected to an electronic device to realize said information transmission.

2. The composite connection port device (10) of claim 1, wherein said power processing unit (11) further includes a buck circuit and a rectifier circuit.

3. The composite connection port device (10) of claim 1, wherein said power processing unit (11) further includes a signal separation circuit.

4. The composite connection port device of claim 1, wherein said output ports further include a plurality of power supply ports (111, 115) and a plurality of signal ports (111, 112,113,114,116,117).

5. The composite connection port device (10) of claim 4, wherein said power supply port is a power supply socket (115), and is used to receive and transmit said local power supply.

6. The composite connection port device (10) of claim 4, wherein said power supply port is selected from the group consisting of a USB port (111) and an IEEE 1394 port.

7. The composite connection port device (10) of claim 6, wherein said USB ports (111) are used to form a USB hub, said respective USB ports (111) are connected to said power processing unit (11), and are used to transmit said working power supply.

8. The composite connection port device (10) of claim 4, wherein said signal port is selected from the group consisting of a telephone port (114), a network port (113), a memory card port (112), a high speed digital port (117), an IEEE1394 port, and a USB port (111).

9. The composite connection port device (10) of claim 4, wherein said signal port is an optical fiber port (116).

10. The composite connection port device (10) of claim 1, wherein said signal processing unit (12) is further connected to a wireless transmission module (13).

## Amended claims

### Amended claims in accordance with Rule 137(2) EPC.

**1.** A composite connection port device (10), comprising:
at least one input terminal (AC, Signal), used to receive a local power supply and perform information transmission;
a power processing unit (11), including a signal separation circuit and connected to said input terminal (AC, Signal), and is used to convert said local power supply into a working power supply and then output the working power supply;
a signal processing unit (12), used to couple and transmit said information; and
a plurality of output ports (111 to 117), used to output said local power supply and said working power supply, and is connected to an electronic device (20 to 90) to realize said information transmission.

**2.** The composite connection port device of claim 1, wherein said power processing unit further includes a buck circuit and a rectifier circuit.

**3.** The composite connection port device of claim 1, wherein said output ports further include a plurality of power supply ports and a plurality of signal ports.

**4.** The composite connection port device of claim 3, wherein said power supply port is a power supply socket, and is used to receive and transmit said local power supply.

**5.** The composite connection port device of claim 3, wherein said power supply port is selected from the group consisting of a USB port and an IEEE1394 port.

**6.** The composite connection port device of claim 5, wherein said USB ports are used to form a USB hub, said respective USB ports are connected to said power processing unit, and are used to transmit said working power supply.

**7.** The composite connection port device of claim 3, wherein said signal port is selected from the group consisting of a telephone port, a network port, a memory card port, a high speed digital port, an IEEE1394 port, and a USB port.

**8.** The composite connection port device of claim 3, wherein said signal port is an optical fiber port.

**9.** The composite connection port device of claim 1, wherein said signal processing unit is further connected to a wireless transmission module.
